# EUROPEAN PATENT APPLICATION

(11) **EP 2 790 282 A1**
(43) Date of publication of application: **15.10.2014**
(21) Application number: 14163765.2
(22) Date of filing: 07.04.2014
(51) Int. Cl.: H02G 3/14

(54) **Frame for mounting electrical wiring devices**

(30) Priority: 08.04.2013 ES 201330495
(71) Applicant: Schneider Electric España, S.A., 08019 Barcelona (ES)
(72) Inventor: Suescun Orrillo, Cesar, 31180 Zizur Mayor (NAVARRA) (ES); González Iribas, Aitor, 31610 Villava (NAVARRA) (ES); Andrés Rodríguez, Iñigo, 31012 Pamplona (NAVARRA) (ES); Rebolé Olleta, José Antonio, 31006 Pamplona (NAVARRA) (ES)
(74) Representative: Cabinet Plasseraud

(57) **Abstract**

The present invention relates to a frame for mounting electrical wiring devices which is intended for being held on a wiring box (5) by means of securing elements, the frame comprising a plastic body (1.1), internally including embedded metal inserts (6) determining mechanical strength for withstanding the holding force of the securing elements of the frame in the mounting of application.

## Description

### Field of the Art

The present invention relates to the mounting of electrical wiring devices, such as switches, sockets, etc., proposing for said function a frame which is made with structural characteristics that give rise to an embodiment in which the aspects of electrical insulation and mechanical strength are advantageously combined.

### State of the Art

Mounting electrical wiring devices, such as switches, sockets, etc., is generally done using a frame on which the electric device to be wired is secured, the frame in turn being secured by means of screws, dogs or similar means, to a box which houses the rear part of the device and a section of the electric cables with which the connection of the device is established.

For that function there are metal frames that have a mechanical strength which, with a relatively thin frame, allows being secured to the corresponding mounting box with the necessary tightening of the set screws to assure that the mounting has no possibility of moving. However, said metal frames are electrically conductive, which entails a risk of short circuits or transmission of electric current to users due to the connections of the device or the connecting cables contacting the metal frame in the wirings of application.

There are also plastic frames which are not electrically conductive due to the nature of their material, and therefore they do not involve the risks of short circuits or transmission of electricity to users. However, the material of these plastic frames has low mechanical strength, such that in order to be able to mount them in the wirings of application with the necessary tightening to assure that there is no possibility of moving, said plastic frames must be structured with an oversized thickness at least in the areas of tightening with set screws.

To prevent the mentioned problems, solutions have been developed based on using a metal frame arranged on a plastic base plate as described in patents US 4733330 or DE 20103739U, for example; or using a metal frame coated with a layer of plastic as described in patent ES 2307131, for example. However, these solutions have high manufacturing costs, and furthermore, superimposing a plate or a layer of plastic on a metal frame means that the assembly always has an oversized thickness which can limit the use in some applications.

### Object of the Invention

The invention proposes a frame for electrical wiring devices which has been developed with structural characteristics making it advantageous in relation to the strength and electrical insulation characteristics.

This frame object of the invention comprises a plastic body internally including embedded metal inserts in areas intended for securing the frame in the mounting of application by means of securing elements such as screws, dogs, or the like.

The metal inserts are included inside the plastic in the process of molding the body of the frame, such that they are the integral parts of said body of the frame, perfectly secured and completely electrically insulated, as they are coated with the plastic.

A frame is thus obtained which has the electrical insulation advantages of conventional plastic frames and which, at the same time, as the result of the metal inserts, also has good mechanical strength in the areas where the securing elements are arranged in the mounting of application, without the need of oversizing the thickness in those areas where the securing elements are arranged.

Based on the foregoing, said frame object of the invention has very advantageous features for its intended function of mounting electrical wiring devices, acquiring its own identity and preferred character with respect to conventional frames which include both metal frames and plastic frames, that have been used in that application until now.

### Description of the Drawings

Figure 1 shows an exploded perspective view of an embodiment of the frame object of the invention, the plastic body being depicted as a completely formed part, even though said part is actually formed by molding, including the metal inserts inside the material thereof.
Figure 2 is a perspective view of the structural assembly of the frame according to its actual constructive formation, with a partial cut-away that allows seeing the inclusion of the metal inserts inside the plastic.

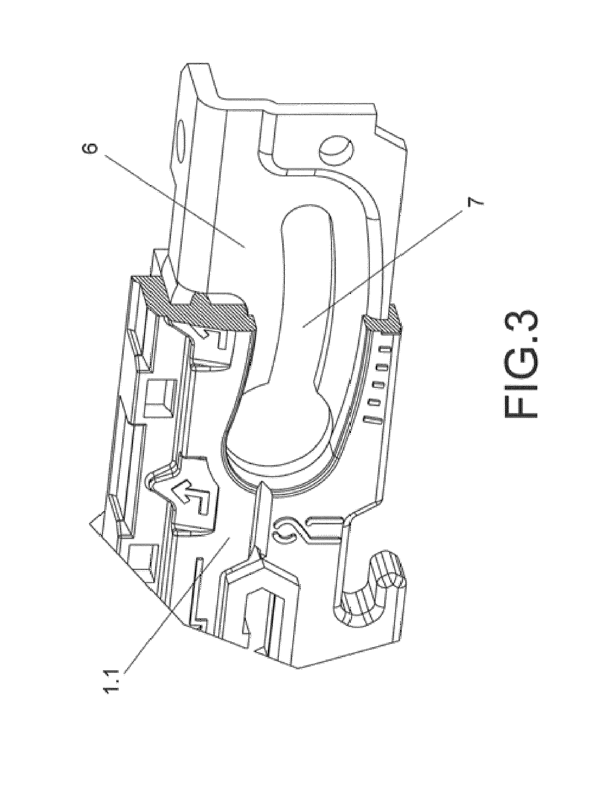

Figure 3 is an enlarged detail of area III indicated with a circle in the preceding figure.
Figure 4 is an exploded perspective view of a mounting of application of the frame being anchored by means of screws on a wiring box.
Figure 5 is an exploded perspective view of a mounting of application of the frame being held by means of dogs with respect to a wiring box.
Figure 6 shows an exploded perspective view of an embodiment of the invention according to a rectangular frame with metal inserts embedded in the transverse sides of the frame.
Figure 7 shows an exploded perspective view of another embodiment of the invention according to a rectangular frame with metal inserts embedded in the longitudinal sides of the frame.

### Detailed Description of the Invention

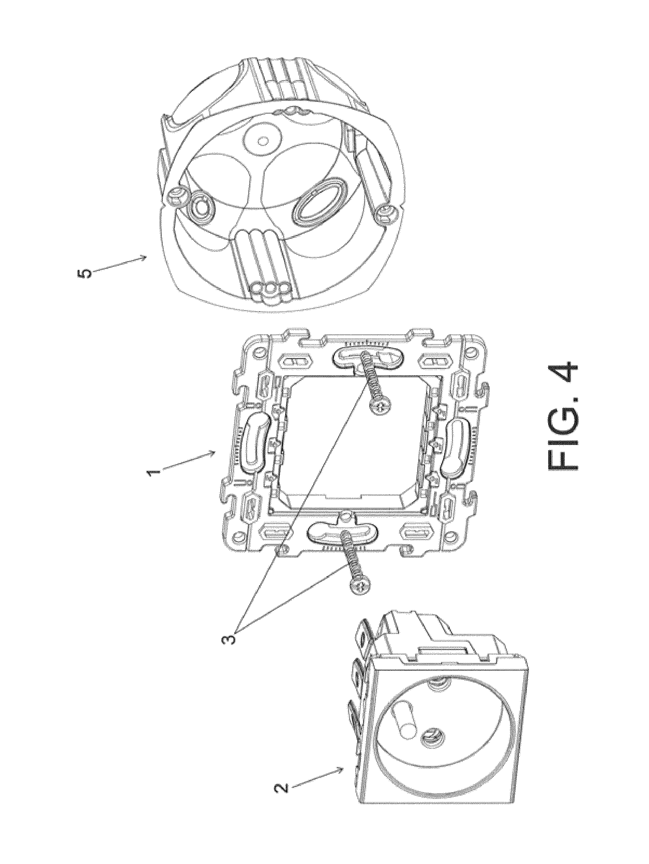

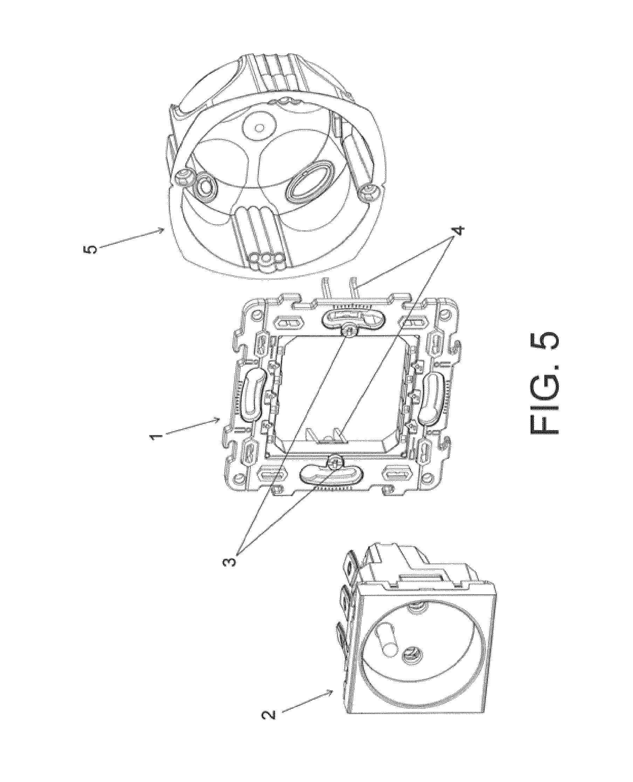

The object of the invention relates to a frame (1) intended for mounting electrical wiring devices (2), such as switches, sockets, etc., by means of securing elements, whereby direct anchoring is established with screws (3) as shown in Figure 4, or by means of a joint action of retaining screws (3) and dogs (4) as shown in Figure 5, for securing the frame with respect to a box (5) that is fixed in the site of application.

The proposed frame (1) comprises a plastic body (1.1) internally including embedded metal inserts (6) arranged in the areas in which holes or openings (7) are located for the passage of set screws (3) through that plastic body (1.1), wherein said screws (3) act as a support for tightening the secure fixing.

The plastic body (1.1) thus assures that the frame (1) is electrically insulating, preventing the possible occurrence of short circuits or the transmission of electricity to the person doing the wiring due to the electrical connections contacting the mounting frame (1) when handling the mounting of electrical wiring devices (2).

On the other hand, the metal inserts (6) confer rigidity to the plastic body (1.1) and determine mechanical strength in the areas of the holes or openings (7) which allows withstanding the necessary tightening force of the screws (3) to assure that the electrical devices (2) are secured without the possibility of moving, without it being necessary to that end to oversize the thickness of the plastic in those areas where the set screws (3) are arranged.

This frame (1) object of the invention is manufactured by molding the plastic body (1.1), the metal inserts (6) being previously arranged in position to subsequently inject the plastic for forming the body (1.1), such that said metal inserts (6) are housed inside said plastic, as internal integral parts of the body (1.1).

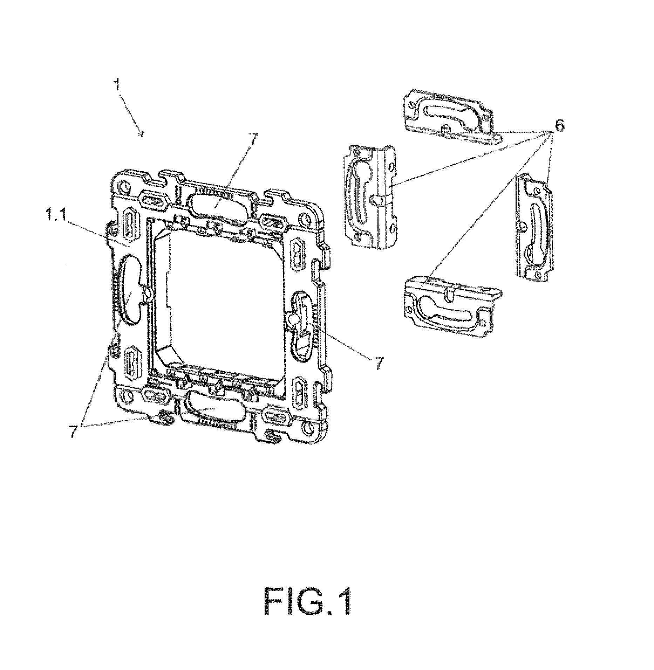

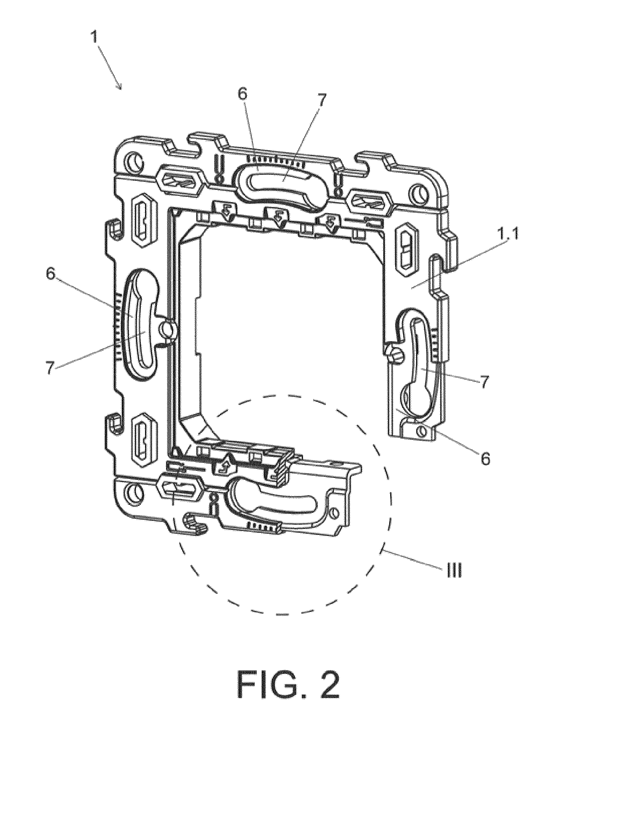

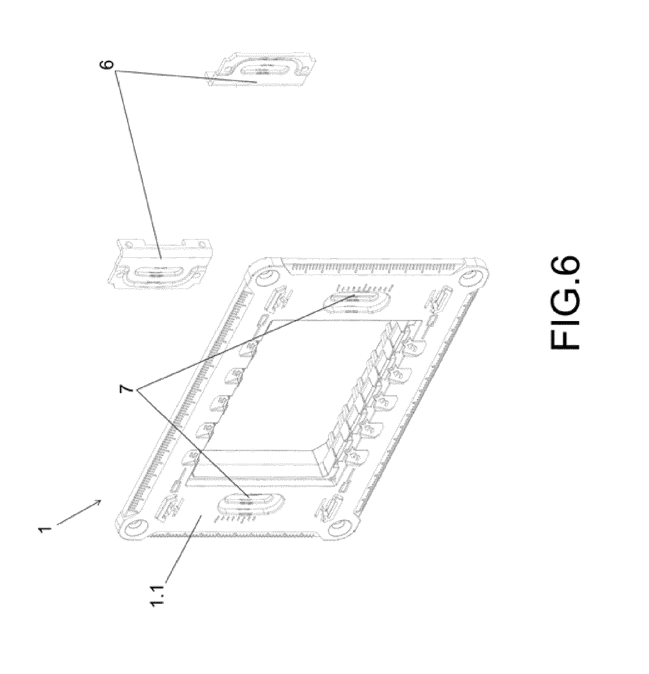

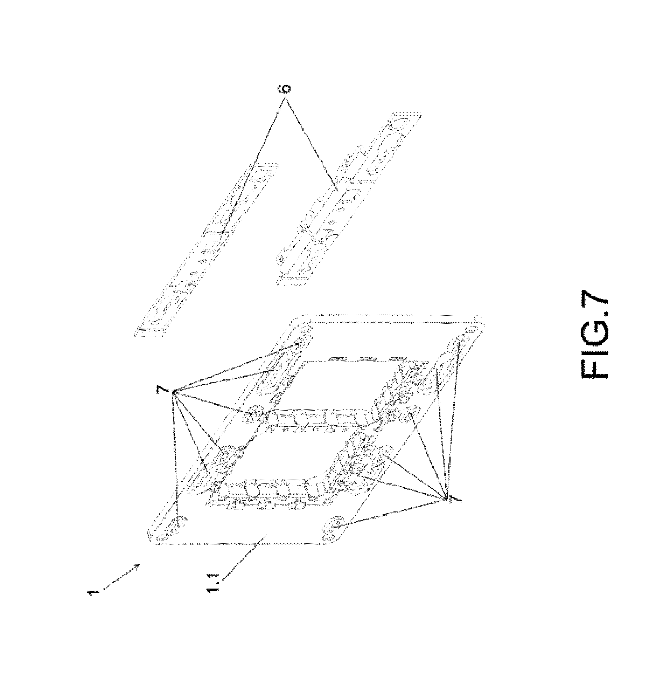

The incorporation of metal inserts (6) in a plastic body (1.1) is applicable in frames of any shape, both if said frames are square-shaped, such as the frame of Figures 1, 2, 4 and 5, and if they are rectangular-shaped, such as the frame of Figure 6, for example, depicting a rectangular frame provided with metal inserts (6) embedded in the transverse sides of the plastic body (1.1), or such as the frame of Figure 7, depicting a rectangular frame provided with metal inserts (6) embedded in the longitudinal sides of the plastic body (1.1) in relation to several holes or openings (7) arranged in each of the longitudinal sides of the body (1.1), without these examples being limiting.

## Claims

1. A frame for mounting electrical wiring devices which is intended for being held on a wiring box (5) by means of securing elements, **characterized in that** it comprises a plastic body (1.1), internally including embedded metal inserts (6) determining mechanical strength for withstanding the holding force of the securing elements of the frame in the mounting of application.

2. The frame for mounting electrical wiring devices according to claim 1, **characterized in that** the metal inserts (6) are located in areas of the body (1.1) in which holes or openings (7) are defined for arranging the securing elements.

3. The frame for mounting electrical wiring devices according to claim 1, **characterized in that** the metal inserts (6) are housed inside the plastic as internal integral parts of the body (1.1).
